# EUROPEAN PATENT SPECIFICATION

(11) **EP 1 704 928 B1**
(45) Date of publication and mention of the grant of the patent: **28.05.2008**
(21) Application number: 06005043.2
(22) Date of filing: 13.03.2006
(51) Int. Cl.: B05D 7/00, C08G 18/08, C08G 18/38, C09D 175/04

(54) **Aqueous coating compositions**
Wässrige Beschichtungszusammensetzungen
Compositions aqueuses de revêtement

(30) Priority: 24.03.2005 US 89120
(43) Date of publication of application: 27.09.2006
(73) Proprietor: E.I. du Pont de Nemours and Company, Wilmington, DE 19898 (US)
(72) Inventor: Huybrechts, Jozef, Theresia, Turnhout 2300 (BE); Vaes, Ann, Koningshooikt 2500 (BE); Linsen, Koen, Bilzen 3740 (BE)
(74) Representative: DuPont Performance Coatings Biering/Blum/Kimpel

(56) References cited:
- WO-A-01/88006
- US-A- 4 339 566
- US-A- 5 665 434

## Description

### Background of the Invention

The invention relates to aqueous coating compositions with improved water dispersibility for automotive and industrial coatings based on binders with functional groups containing active hydrogen and polyisocyanate cross-linking agents.

### Description of the Prior Art

Against the background of increasingly stringent environmental legislation, water-based paints have become more and more important in recent years in various fields of application, including, vehicle painting. Water-soluble or water-dispersible hydroxyfunctional binders are provided for the production of water-based two-component polyurethane paints. It has proven difficult to incorporate conventional hydrophobic polyisocyanates, i.e., polyisocyanates that have not been specifically hydrophilized, as hardeners, into the aqueous system. There have therefore been attempts to render the polyisocyanates hydrophilic to achieve better dispersibility in water and miscibility with the water-thinnable binders.

For example, nonionic polyisocyanates that have been rendered hydrophilic by polyethers are used in practice. The production of these water-dispersible polyisocyanates is described, for example, in EP A-959087, page 2, lines 25-46. Despite being broadly accepted in the market, polyether-modified polyisocyanates still have drawbacks. The high polyether content that is required for adequate dispersibility, in particular for use as crosslinking agents in aqueous two-component polyurethane paints, makes the resultant coatings permanently hydrophilic and insufficiently hard.

To avoid these drawbacks, attempts have also already been made to produce self-dispersible polyisocyanates that are rendered hydrophilic by incorporation of ionic groups. Polyisocyanates of this type, which contain chemically bound carboxyl groups, are described, for example, in EP-A-0443138, EP-A-0510438 and EP-A-0548669. Although these polyisocyanates may be stirred in a very finely divided form into aqueous systems after neutralization of the carboxyl groups, without the need for high shearing forces, they are inadequately stable in storage, in particular in neutralized form.

EP-A-0703255 also describes ionically modified polyisocyanates that contain, as emulsifiers, reaction products of polyisocyanate and any hydroxy-/mercapto- or aminofunctional compounds with at least one sulphuric acid group. Hydroxysulphonic acids containing aliphatically bound OH groups are mentioned as preferred structural components for emulsifier production. However, all the hydroxysulphonic acids mentioned generally form reaction products of polyisocyanates that have a pronounced yellow colour, and this precludes use of these products as the crosslinking component in high-quality paint systems, in particular clear-coat systems.

WO-A-01/88006, also discloses water-dispersible polyisocyanates which are produced by reacting polyisocyanates with 2-(cyclohexylamino)ethane sulphonic acid and/or 3-(cyclohexylamino)propane sulphonic acid. These are dispersible in water after at least partial neutralization of the sulphonic groups. However, polyisocyanates that are modified in this way are very expensive and show an insufficient long term stability.

A general disadvantage of hydrophilically modified polyisocyanates is, that in aqueous coating compositions containing those polyisocyanates significant amounts of organic solvents are necessary to achieve the same good level of appearance of the coatings as known from solvent-based coating compositions.

There was therefore a need for aqueous coating compositions based on binder components with functional groups containing active hydrogen and polyisocyanate hardeners which, on the one hand, comprise storage-stable binder and crosslinking components, enhance the miscibility of the polyisocyanates with the water-thinnable binders and enhance the dispersibility of the polyisocyanates in aqueous media and, on the other hand, lead to coatings that are insensitive to moisture, are highly resistant to chemicals, show a very good appearance and are sufficiently hard. Furthermore, such aqueous coating compositions should contain only small amounts of organic co-solvents.

### Summary of the Invention

The present invention relates to aqueous coating compositions comprising the following components:
A) at least one water-dilutable binder with functional groups containing active hydrogen,
B) at least one polyisocyanate cross-linking agent with free isocyanate groups,
C) at least one amino functional compound having at least one group selected from a group consisting of primary amino group, secondary amino group and mixtures thereof, and having at least one group selected from a group consisting of sulfonic acid group, phosphonic acid group and mixtures thereof, and
D) water and optionally,
E) usual coating additives, pigments and organic solvents.
   Components C) have preferably a molecular weight of 97 to 7000 g/mole, more preferred of 125 to 2000 g/mol and most preferred of 125 to 1000 g/mol.

The molecular weight of component C) as used here and thereafter is the number average molecular weight Mn.

The present invention also relates to a process for preparing aqueous coating compositions based on binders with functional groups containing active hydrogen and polyisocyanate cross-linking agents with free isocyanate groups, comprising the steps:
I) providing a binder component comprising at least one water-dilutable binder with functional groups containing active hydrogen A),
II) providing a cross-linking agent component, comprising at least one polyisocyanate cross-linking agent with free isocyanate groups B),
III) mixing the binder component and the crosslinking agent component with each other and
IV) adding at least one amino functional compound C) having at least one group selected from a group consisting of primary amino group, secondary amino group and mixtures thereof, and having at least one group selected from a group consisting of sulfonic acid group, phosphonic acid group and mixtures thereof, and preferably having a molecular weight of 97 to 7000 g/mole, more preferred of 125 to 2000 g/mol and most preferred of 125 to 1000 g/mol, to the polyisocyanate cross-linking agent B),
wherein the amino functional compound C) is added to the polyisocyanate cross-linking agent B) shortly before application of the aqueous coating composition.

The amino functional compound C) can be added to the polyisocyanate cross-linking agent B) separately (1) or as part of the binder component A) due to prior mixing with the binder component A) (2), wherein in case (1) the amino functional compound C) can be added to the polyisocyanate cross-linking agent B) after mixing the binder component and the crosslinking agent component or can be added before mixing the binder component and the crosslinking agent component. Alternatively, all three components A), B) and C) can be simultaneously mixed together. Usually compound C) is added to the polyisocyanate cross-linking agent B) at the same time prior to application the binder component and the polyisocyanate crosslinking agent of a normal two-component system are usually mixed.

### Detailed Description of the Invention

It was surprising and not obvious that the in *situ* hydrophilization of conventional hydrophobic polyisocyanates (i.e., not specifically hydrophilized polyisocyanates) with sulfonic and/or phosphonic acid groups directly before application of the coating composition, i.e., addition of the amino and acid functional compound C) to the polyisocyanate component B) just before application of the coating composition, enhanced the dispersibility of the polyisocyanate component in the aqueous binder system and in the aqueous medium in general and enhanced the compatibility and miscibility with the water-thinnable binders, without having to allow for the drawbacks of hydrophilically modified polyisocyanates known from the prior art, such as, deficient stability in storage or yellowing of the hardener component. Cured coatings showing a good appearance, which are also insensitive to moisture and resistant to chemicals, have surprisingly been obtained with the coating compositions according to the invention.

Hereafter the invention is described in more detail.

The term (meth)acrylic as used here and hereinafter should be taken to mean methacrylic and/or acrylic.

Unless stated otherwise, all molecular weights (both number and weight average molecular weight) referred to herein are determined by GPC (gel permeation chromatographie) using polystyrene as the standard.

The coating composition of the present invention preferably comprises 10-90% by weight solids of at least one water-reducible binder with functional groups containing active hydrogen (component A), 5-70% by weight solids of at least one curing agent with free isocyanate groups (component B) and 0.05-15.0% by weight solids, especially preferred, 0.1-10% by weight solids and most preferred, 0.7-5% by weight solids of component C), wherein the % by weight of components A), B) and C) add up to 100% by weight.

Component A) of the coating composition according to the invention comprises water-dilutable binders with functional groups containing active hydrogen. The water-dilutable binders are oligomeric and/or polymeric compounds with a number average molecular weight (Mn) of, e.g., 500 to 500,000 g/mole, preferably of 1100 to 300,000 g/mole. The functional groups with active hydrogen in particular comprise hydroxyl groups, primary and/or secondary amino groups. Binders with hydroxyl groups are preferably used as component A).

The binders with hydroxyl groups are for example the polyurethanes, (meth)acrylic copolymers, polyesters and polyethers, known from polyurethane chemistry to the skilled person, which are used in the formulation of aqueous coating compositions. They may each be used individually or in combination with one another.

In order to ensure sufficient water dilutability of the binders A), these binders are modified in a suitable manner to render them hydrophilic. The binders A) may be ionically (anionically and/or cationically) and/or non-ionically modified. An anionic and/or non ionic modification is preferred. An anionic modification may be obtained, for example, by incorporating carboxyl groups which are at least partially neutralized. A non ionic modification may be obtained, for example, by incorporating polyethylene oxide units. Alternatively, or in addition thereto, it is possible to obtain water-dilutability via external emulsifiers.

Preferably, the water-dilutable binders A) contain carboxylic acid groups.

Preferably, the water-dilutable binders A) do not contain sulfonic and/or phosphonic acid groups.

Examples of water-dilutable polyurethane resins are those, for example, with a number average molecular weight Mn of 500 to 500 000 g/mol, preferably, of 1100 to 300 000 g/mol, most preferably, of 5000 to 300 000 g/mol, an acid value of 10 to 100 mg KOH/g, preferably of 20 to 80 mg KOH/g, and a hydroxyl value of 40 to 400 mg KOH/g, preferably, of 80 to 250 mg KOH/g. Appropriate polyurethane resins which may be used are, for example, prepared by reacting compounds which are reactive with respect to isocyanate groups and polyisocyanates having at least 2 free isocyanate groups per molecule.

Polyols of high molecular weight can be used as compounds which are reactive with respect to isocyanate groups, preferably, polyester polyols, polyether polyols and/or polycarbonate polyols with a molecular weight of, for example, 500-6000 g/mol. Polyols of low molecular weight with a molecular weight of 60-400 g/mol can also be co-used. Aliphatic and/or cycloaliphatic diisocyanates can preferably be used as polyisocyanates. Examples of useful polyisocyanates are phenylene diisocyanate, xylylene diisocyanate, diphenylmethane diisocyanate, isophorone diisocyanate, dicyclohexylmethane diisocyanate, tetramethylene diisocyanate, hexamethylene diisocyanate. In order to obtain a sufficient water-dilutability, the polyurethane resins can be modified, for example, with anionic groups as described above. The anionic groups can be introduced by way of compounds having at least one group reactive with respect to isocyanate groups and at least one group capable of producing anions. Preferred compounds of this type are dihydroxycarboxylic acids, with particular preference for dimethylolpropionic acid.

The thus obtained polyurethane resins can still be subjected to chain extension to increase the molecular weight. For example, NCO-functional polyurethane prepolymers can be reacted with compounds, which are reactive with respect to isocyanate groups. Compounds, which are reactive with respect to isocyanate groups, are in particular compounds with hydroxyl and/or secondary and/or primary amino groups. OH-functional polyurethane prepolymers can be chain extended for example with polyisocyanates

The water-dilutable polyurethane resins include such resins which are in modified form, for example, as silicon-modified or (meth)acrylated polyurethane resins. Examples of water-dilutable polyurethane resins which may be used are described in U.S. 5,492,961, U.S. 5,141,987, U.S. 5,556,912, DE-A-41 15 042, U.S. 5,635,559, U.S. 5,691,425, DE-A-42 28 510, U.S. 5,854,337 and U.S. 4,489,135. The polyurethanes can be prepared in the organic phase and converted afterwards into the aqueous phase, but can also be prepared directly in the aqueous phase to form polyurethane emulsions. Those polyurethane emulsions may be crosslinked internally and can be defined as microgels. Preferably, those internally crosslinked polyurethane emulsions are used in waterborne basecoats.

Examples of water-dilutable poly(meth)acrylate resins include all water-soluble or water-dispersible poly(meth)acrylate resins which are suited for aqueous coatings and known to a skilled person. For example, they can be those with a number average molecular mass Mn of 1000-20000 g/mol, preferably, of 1100-15000, an acid value of 10-100 mg KOH/g, preferably, of 15-50 and a hydroxyl value of 40-400 mg KOH/g, preferably, of 60-200 mg KOH/g. The water-dilutable poly(meth)acrylate resins can also have been prepared in the presence of different binders, e.g., in the presence of oligomeric or polymeric polyester and/or polyurethane resins.

The poly(meth)acrylate copolymer can be prepared by free-radical polymerization of polymerizable, olefinically unsaturated monomers, optionally, in presence of oligomeric or polymeric polyester and/or polyurethane resins. Free-radically polymerizable, olefinically unsaturated monomers, which may be used are monomers which, in addition to at least one olefinic double bond, also contain further functional groups and monomers which, apart from at least one olefinic double bond, contain no further functional groups. Further functional groups may be, for example, urea, hydroxyl, carboxyl, sulfonic acid, silane, amine, amide, acetoacetate or epoxy groups. It would be clear that only those functional groups can be combined in the poly(meth)acrylate copolymer which do not tend to self-crosslink.

Olefinically unsaturated monomers with hydroxyl groups are used to introduce hydroxyl groups into the (meth)acrylic copolymers. Suitable hydroxy-functional unsaturated monomers are, for example, hydroxyalkyl esters of alpha, beta-olefinically unsaturated monocarboxylic acids with primary or secondary hydroxyl groups. These may, for example, comprise the hydroxyalkyl esters of acrylic acid, methacrylic acid, crotonic acid and/or isocrotonic acid. The hydroxyalkyl esters of (meth)acrylic acid are preferred. The hydroxyalkyl residues may contain, for example, 2-10 C atoms, preferably, 2-6 C atoms. Examples of suitable hydroxyalkyl esters of alpha, beta-olefinically unsaturated monocarboxylic acids with primary hydroxyl groups are hydroxyethyl (meth)acrylate, hydroxypropyl (meth)acrylate, hydroxybutyl (meth)acrylate, hydroxyamyl (meth)acrylate, hydroxyhexyl (meth)acrylate. Examples of suitable hydroxyalkyl esters with secondary hydroxyl groups are 2-hydroxypropyl (meth)acrylate, 2-hydroxybutyl (meth)acrylate and 3-hydroxybutyl (meth)acrylate. Further olefinically unsaturated monomers with hydroxyl groups may, of course, also be used.

Carboxyl functional olefinically unsaturated monomers are used to introduce carboxyl groups into the (meth)acrylic copolymers. Examples of suitable olefinically unsaturated carboxylic acids include acrylic acid, methacrylic acid, crotonic acid and isocrotonic acid, itaconic acid, maleic acid, fumaric acid and the halfesters of the difunctional acids. Acrylic and methacrylic acid are preferred.

Examples of other additional suitable unsaturated monomers, which contain apart from an olefinic double bond further functional groups are ethyleneurea ethyl (meth)acrylate, dimethylaminoethyl (meth)acrylate, acetoacetoxyethyl (meth)acrylate, (meth)acrylamide, alkoxy methyl (meth)acrylamides, vinyl silane, methacryloxyethyl trialkoxysilanes, acrylamido 2 - methyl propane, vinyl imidazole.

Unsaturated monomers which, apart from at least one olefinic double bond, contain no further functional groups are, for example, aliphatic esters of olefinically unsaturated carboxylic acids, vinyl ester and /or vinylaromatic hydrocarbons.

Examples of suitable aliphatic esters of olefinically unsaturated carboxylic acids include, in particular, esters of alpha, beta-olefinically unsaturated monocarboxylic acids with aliphatic alcohols. Examples of suitable olefinically unsaturated carboxylic acids are acrylic acid, methacrylic acid, crotonic acid and isocrotonic acid. The alcohols are, in particular, aliphatic monohydric branched or unbranched alcohols having 1-20 carbon atoms in the molecule. Examples of (meth)acrylates with aliphatic alcohols are methyl acrylate, ethyl acrylate, isopropyl acrylate, tert.-butyl acrylate, n-butyl acrylate, isobutyl acrylate, 2-ethylhexyl acrylate, lauryl acrylate, stearyl acrylate and the corresponding methacrylates.

Examples of suitable vinyl esters are vinyl acetate, vinyl propionate and vinyl esters of saturated monocarboxylic acids branched in the alpha position, e.g., vinyl esters of saturated alpha,alpha'-dialkylalkane monocarboxylic acids and vinyl esters of saturated alpha-alkylalkane monocarboxylic acids having in each case 5-13 carbon atoms, preferably, 9-11 carbon atoms in the molecule.

Examples of vinylaromatic hydrocarbons preferably are those having 8-12 carbon atoms in the molecule. Examples of such monomers are styrene, alpha-methylstyrene, chlorostyrenes, vinyltoluenes, 2,5-dimethylstyrene, p-methoxystyrene and tertiary-butylstyrene. Most preferred styrene is used as component c).

The preparation of the (meth)acrylic copolymer takes place by usual preparation techniques, e.g., by radical polymerization in the organic phase. After solution polymerization the copolymer is converted into the aqueous phase. But the (meth)acrylic copolymer can also be prepared by radical emulsion polymerization in the aqueous phase to form (meth)acrylic emulsions. Those (meth)acrylic emulsions may be crosslinked internally and can be defined as microgels.Preferably those internally crosslinked (meth)acrylic copolymer emulsions are used in waterborne basecoats.

Examples of water-dilutable polyester resins which can be used as binder component A) include all water-soluble or water-dispersable polyester resins which are suited for aqueous coatings, for example, hydroxyfunctional polyesters with a number average molecular weight of 500-10,000 g/mol, preferably, of 1100-8000 g/mol, an acid value of 10-150 mg KOH/g, preferably, of 15-50 mg KOH/g and a hydroxyl value of 40-400 mg KOH/g, preferably, of 50-200 g/mol. The polyesters may be saturated or unsaturated and they may optionally be modified with fatty acids. The polyesters are produced using known processes with elimination of water from polycarboxylic acids and polyalcohols.

The coating compositions can also contain low molecular reactive components, so-called reactive thinners, which are able to react with the cross-linking components. Examples of these are hydroxy- or aminofunctional reactive thinners.

The aqueous coating compositions, according to the invention contain polyisocyanates with free isocyanate groups (component B) as cross-linking agents. Examples of the polyisocyanates are any number of organic polyisocyanates with aliphatically, cycloaliphatically, araliphatically and/or aromatically bound free isocyanate groups. The polyisocyanates are liquid at room temperature or become liquid through the addition of organic solvents. At 23°C, the polyisocyanates generally have a viscosity of 1 to 6,000 mPas, preferably, above 5 and below 3,000 mPas.

The preferred polyisocyanates are polyisocyanates or polyisocyanate mixtures with exclusively aliphatically and/or cycloaliphatically bound isocyanate groups with an average NCO functionality of 1.5 to 5, preferably 2 to 4.

Examples of particularly suitable polyisocyanates are what are known as "paint polyisocyanates" based on hexamethylene diisocyanate (HDI), 1-isocyanato-3,3,5-trimethyl-5-isocyanatomethyl-cyclohexane (IPDI) and/or bis(isocyanatocyclohexyl)-methane and the derivatives known per se, containing biuret, allophanate, urethane and/or isocyanurate groups of these diisocyanates which, following production, are freed from surplus parent diisocyanate, preferably by distillation, with only a residue content of less than 0.5% by weight. Triisocyanates, such as, triisocyanatononan can also be used.

Sterically hindered polyisocyanates are also suitable. Examples of these are 1,1,6,6-tetramethyl-hexamethylene diisocyanate, 1,5-dibutylpenta-methyldiisocyanate, p- or m-tetramethylxylylene diisocyanate and the appropriate hydrated homologues.

In principle, diisocyanates can be converted by the usual method to higher functional compounds, for example, by trimerization or by reaction with water or polyols, such as, for example, trimethylolpropane or glycerine. The polyisocyanates can also be used in the form of isocyanate-modified resins.

The polyisocyanate cross-linking agents can be used individually or mixed.

The polyisocyanate cross-linking agents are those commonly used in the paint industry, and are described in detail in the literature and are also obtainable commercially.

The isocyanate groups of polyisocyanate crosslinking agent B) may be partially blocked. Low molecular weight compounds containing active hydrogen for blocking NCO groups are known. Examples of these are aliphatic or cycloaliphatic alcohols, dialkylaminoalcohols, oximes, lactams, imides, hydroxyalkyl esters, esters of malonic or acetoacetic acid.

Although not preferred, the polyisocyanate crossliking agent B) can be used in combination with co-crosslinkers, e.g., in combination with melamine resins and/or completely blocked polyisocyanates.

According to the invention amino functional and acid functional compounds are used as component C) to hydrophilize the polyisocyanate component B) in-situ. Component C) has at least one group selected from a group consisting of sulfonic acid group, phosphonic acid group and mixtures therefrom. Sulfonic acid group shall mean a group of formula - S(O)₂OH, phosphonic acid group shall mean a group of formula -PO(OH)₂ or -PO(OH)R1, wherein R1 is selected from linear or branched, substituted or unsubstituted alkyl, cycloalkyl and aryl group with up to 18 carbon atoms. The group R1 may contain heteroatoms, e.g., S and/or O.

Component C) may have one or more, e.g., one, two or three of the above mentioned sulfonic acid groups or phosphonic acid groups. It is also possible that component C) has at least one sulfonic acid group and in addition at least one phosphonic acid group in the same molecule. In addition to the at least one sulfonic acid group and/or phosphonic acid group component C) has at least one primary and/or secondary amino group. Component C) may have one or more, e.g., one, two or three of the above mentioned amino groups.

Suitable compounds which can be used as component C) are those of the following formulas I to III:

I) HNR-Z-S(O)₂OH,

II) HNR-Z-P(O)(OH)₂,

III) HNR-Z-PO(OH)OR1

wherein R is selected from hydrogen and linear or branched alkyl, cycloalkyl and aryl group with up to 18 carbon atoms and Z is an organic rest selected from linear or branched, substituted or unsubstituted alkyl, cycloalkyl and aryl group with up to 16 carbon atoms, whereas the organic rest may contain in addition ester and/or ether groups. R and Z may contain heteroatoms, e.g., S and/or O. R and Z are selected independently for each of formulas I to III.

Examples for suitable amino sulfonic acids which can be used as component C) are 3-(2-aminoethylamino) propane sulfonic acid, 3-cyclohexylaminopropane-1-sulfonic acid, 2-cyclohexylaminoethane sulfonic acid, 3-amino-1-propan sulfonic acid, taurine, methyltaurine, butyltaurine, 1-hydrazine-disulphonic acid, sulphanilic acid, N-phenylaminomethane-sulphonic acid, 4,6-dichloroaniline-sulphonic acid-2, phenylenediamine-1,3-disulphonic acid-4,6, N-acetylnaphthylamine-1-sulphonic acid-3, naphthyl-amine-1-sulphonic acid, naphthylamine-2-sulphonic acid, naphthylamine-disulphonic acid, naphthyl-aminetrisulphonic acid, 4,4'-di-(p-amino-benzoyl-amino)-diphenyl ureadisulphonic acid-3,3', phenyl-hydrazine-disulphonic acid-2,5, 2,3 - dimethyl-4-aminoazobenzene-disulphonic acid-4'-5, carbazole-disulphonic acid-2,7, 3-amino-benzoic acid-1-sulphonic acid-5, 3-amino-toluene-N-methane-sulphonic acid, 4,6-diaminobenzene-disulphonic acid-1,3, 2,4-diamino - toluene - sulphonic acid-5, 4,4'-diamino-diphenyl - disulphonic acid-2,2', 2-aminophenol-sulphonic acid-2,2-amino-anisole-N-methanesulphonic acid and 2-amino-diphenylamine-sulphonic acid.

Examples for suitable amino phosphonic acids which can be used as component C) are 2-amino-4-phosphonobutyric acid (D,DL,L), 2-amino-6-phosphonohexanoic acid (all optical isomers and hydrate), 2-amino-5-phosphonopentanoic acid (all optical isomers and hydrate), 2-amino-3-phosphonopropionic acid (all optical isomers and hydrate) and 2-amino-5-phosphonovaleric acid.

Further examples of suitable compounds C) are compounds which can be prepared via addition reaction of ammonium and amine compounds having at least one primary amine group or at least two secondary amine groups with olefinically unsaturated, e.g., monounsaturated, di- or monosulfonic acids, such as, 2-acrylamido-2-propane sulfonic acid (AMPS 2404 from Lubrizol), styrene sulfonic acid and 2-sulfoethyl (meth)acrylate or via -addition reaction of ammonium and amine compounds having at least one primary amine group or at least two secondary amine groups with olefinically unsaturated, e.g., monounsaturated, di- or monophosphonic acids, e.g., with vinylphosphonic acid (available from Albright and Wilson).

Examples of suitable amine compounds which can be used to prepare the above mentioned addition reaction products are the well known aliphatic, cycloaliphatic, heterocyclic and aromatic mono-, di-, tri- or higher functional amines. Examples of monoamines are (cyclo)aliphatic alkyl amines and alkoxy alkyl amines with 1-18 carbon atoms in the molecule and substituted derivatives thereof, wherein the alkyl groups can be linear and/or branched. Examples are monomethyl amine, ethyl amine, propyl amine, isopropyl amine, butyl amine, secondary butyl amine, tertiary butyl amine, hexylamine, ethyl hexyl amine, octyl amine, stearyl amine, 2-methoxy 1-ethyl amine, 2-ethoxy ethyl amine, 3-ethoxy propyl amine and 3-methoxy propyl amine. Further examples of monoamines are aromatic amines and substituted derivatives thereof, e.g., o- toluidine, 2-phenyl ethylamine, benzylamine, aniline, aminopropyl morphiline and aminopropyl imidazole as well as monoamines formed after propoxylation or ethoxylation of mono-alcohols, phenols or alkyl substituted alkyl phenols like e.g. Surfonamine^{®} ML-300 and Surfonamine^{®} MNPA-1000 (available from Huntsman).

Examples of diamines are (cyclo)aliphatic alkyl amines with 1-15 carbon atoms in the molecule and substituted derivatives thereof, wherein the alkyl groups can be linear and/or branched. Examples are ethylene diamine, 1,3-propane diamine, neopentyldiamine, hexamethylene diamine, octamethylene diamine, isophorone diamine, 4,4'-diamino dicyclohexylmethane. Aromatic diamines are e.g., 4,4'-diamino diphenylmethane and 2-amino benzamide. Examples of triamines are diethylene triamine and dipropylene triamine. Examples of higher molecular weight diamines and triamines are propoxylated and/or ethoxylated amine compounds with terminal amino groups with a number average molecular weight Mn of up to 6000. Such propoxylated and/or ethoxylated polyamine compounds are commercially available from Huntsman under the name Jeffamine^{®}.

To prepare the above mentioned addition reaction products it is possible to react, e.g., one mol of a primary monoamine with one mol of an olefinically mono-unsaturated sulfonic or phosphonic acid or to react one mol of a diamine with at least one primary amine group with two mols of an olefinically mono-unsaturated sulfonic or phosphonic acid.

Preferred components C) are those having one or two primary and/or secondary amino groups. Especially preferred are taurine, 3-cyclohexylamino-1-propane sulfonic acid and the addition products of 2-acrylamido -2-methylpropanesulfonic acid and mono - and diamines.

Sulfonic acid group containing components C) and phosphonic acid group containing components C) can be used separately or in combination with each other. Furthermore components C) may be used containing only at least one sulfonic acid group, containing only at least one phosphonic acid group or containing both, at least one sulfonic acid and at least one phosphonic acid group. Combinations of these components C) can also be used.

In addition compounds containing at least one sulfonic and/or phosphonic acid group and at least one carboxyl group in the same molecule can be used as component C).

Furthermore it is possible to combine at least one component C) of the present invention with carboxyl and amino functional compounds as described, for example, in the not yet published earlier patent application U.S. Serial No. 11/009,433, filed December 10, 2004 of the same applicant.

The binders with functional groups containing active hydrogen A) and the polyisocyanate cross-linking agents B) are used in such proportion that the equivalent ratio of functional groups containing active hydrogen, preferably, hydroxyl groups, of binders A) to the isocyanate groups of cross-linking components B) available for the crosslinking reaction with the functional groups containing active hydrogen of binders A), can be 5:1 to 1:5, for example, preferably, 3:1 to 1:3, and in particular, preferably, 1.5:1 to 1:1.5. If reactive thinners are used, their reactive functions should be taken into account when calculating the equivalent ratio.

The coatings, according to the invention, contain furthermore water, for example, 30-60% by weight, and possibly small amounts of organic solvents, e.g., up to 15% by weight, preferably, up to 10% by weight based on the entire coating composition. The organic solvents are solvents conventionally used in coating techniques. These may originate from the preparation of the binders or are added separately. Examples of suitable solvents are monohydric or polyhydric alcohols, e.g., propanol, butanol, hexanol; glycol ethers or esters, for example, diethylene glycol dialkyl ether, dipropylene glycol dialkyl ether, each with C1- to C6-alkyl, ethoxypropanol, butyl glycol; glycols, for example, ethylene glycol, propylene glycol, N-methyl pyrrolidone and ketones, e.g., methyl ethyl ketone, acetone, cyclohexanone; aromatic or aliphatic hydrocarbons, for example, toluene, xylene, or straight-chain or branched aliphatic C6-C12-hydrocarbons. If organic solvents are present, water-miscible organic solvents are preferred.

The coating compositions, according to the invention, can contain pigments, fillers and/or usual coating additives. All colour and/or special effect-giving pigments of organic or inorganic type used in paints are suitable for pigments. Examples of inorganic or organic colour pigments are titanium dioxide, micronized titanium dioxide, iron oxide pigments, carbon black, azo pigments, phthalocyanine pigments, quinacridone or pyrrolopyrrole pigments. Examples of special effect pigments are metal pigments, for example, from aluminum or copper, interference pigments, such as, for example, aluminum coated with titanium dioxide, coated mica, graphite effect pigments and iron oxide laminae. Examples of fillers are silicon dioxide, barium sulphate, talcum, aluminium silicate and magnesium silicate.

The additives are additives usually used in the paint industry. Examples of such additives are light stabilizers, for example, based on benztriazoles and HALS (hindered amine light stabilizer) compounds, flow control agents based on (meth)acrylic homopolymers or silicon oils, rheology-influencing agents, such as, highly disperse silicic acid or polymeric urea compounds, thickeners, such as, cross-linked polycarboxylic acid or polyurethanes, anti-foaming agents, wetting agents, curing accelerators for the cross-linking reaction, for example, organic metallic salts, such as, dibutyl tin dilaurate, zinc naphthenate and compounds containing tertiary amino groups, such as, triethylamine for the cross-linking reaction of hydroxy functional binders with polyisocyanates. The additives are added in the usual amounts familiar to the person skilled in the art.

The process for producing the coating compositions according to the invention comprises the aforementioned steps I to IV. It is essential to the invention that the acid and amino functional component C) is added to the polyisocyanate component B) or mixed therewith just before use, i.e., just before application of the coating composition. Component C) may be added in various ways:
(1) component C) may be added to the polyisocyanate component as a separate component.
(2) component C) may be added to the polyisocyanate component as a constituent of the binder component (B).
(3) components A), B) and C) may be mixed together simultaneously.

In case (1), component C) may be added after or before mixing binder component A) and polyisocyanate component B), but it is definitely preferred to add component C) before mixing binder component A) and polyisocyanate component B). If hydroxyfunctional binders A) are used, method (2) is preferred, i.e., component C) is added as a constituent of the binder component A) to the polyisocyanate component B). In this case, a single component AC) containing both the binder component A) and component C) may be produced, stored and presented for use, provided that a desired storage stability is given. A normal two-component system can then be used in the conventional manner, no additional components C) being required by the user.

Therefore, especially preferred aqueous coating compositions according to the invention are those, comprising:
Component **AC)**, which comprises a mixture of at least one water-dilutable hydroxy- functional binder A) and at least one amino functional and acid functional compound C) having at least one group selected from a group consisting of primary amino group, secondary amino group and mixtures thereof, and having at least one group selected from a group consisting of sulfonic acid group, phosphonic acid group and mixtures thereof, and having preferably a molecular weight of 97 to 6000 g/mol, more preferred of 125 to 2000 g/mol and most preferred of 125 to 1000 g/mol;
Component **B)** which comprises at least one polyisocyanate cross-linking agentwith free isocyanate groups,
D) water and optionally,
E) usual coating additives, pigments and organic solvents.

Accordingly an especially preferred process for producing the aqueous coating compositions according to the invention comprises
I) providing a component AC) comprising a mixture of at least one water-dilutable hydroxy- functional binder A) and at least one amino functional and acid functional compound C),
II) providing a cross-linking agent component, comprising at least one polyisocyanate cross-linking agent with free isocyanate groups B),
III) mixing component AC) and the crosslinking agent component with each other shortly before application of the aqueous coating composition.

In a further embodiment, it is also possible to use or to store component C) or an aqueous solution of component C) separately. Component C) or an aqueous solution of component C) may be stored, e.g., as special additive constituent in a paint mixing system, comprising a number of color-imparting and special effect-imparting paint components (tint lines or mixing paints) as well as other components such as binder components, e.g., in a paint mixing system for pigmented base coats or topcoats. In this embodiment, the separately stored component C) can be mixed simultanously with component A) and B); can be added to polyisocyanate B) and mixed then with binder A) or can be added to binder A) and mixed then with polyisocyanate B), whereas the last way is preferred.

Since the coating composition of the present invention is a two-component system, generally binder component A) and polyisocyanate component B) and in the preferred embodiment component AC) containing hydroxyl groups and amino groups and polyisocyanate component B) may only be mixed together shortly before application. The term "shortly before application" is well-known to a person skilled in the art. The time period within which the ready-to-use coating composition may be prepared prior to the actual use/application depends, e.g., on the pot life of the coating composition.

In principle, the coatings can still be adjusted to spray viscosity with water and/or organic solvents prior to application. Pigments, fillers and additives generally used for paint may be used in one and/or both components of the two-component system.

As the acid and amino functional component C) to be used according to the invention is added to the polyisocyanate component B) just before use or application of the entire coating composition, the polyisocyanates are hydrophilized in situ just before use of the coating composition. It is thus possible, as already described hereinbefore, simultaneously to mix components A), B) and C) or to mix a premixed component AC) with the polyisocyanate component B), particularly when using hydroxyfunctional components A). As the reaction of the isocyanate groups with the amino groups of component C) is kinetically preferred to the hydroxyl/isocyanate reaction, the former takes place directly after mixing of components B) and C) and thus allows introduction of sulfonic acid and/or phosphonic acid groups into the polyisocyanate before the actual hydroxyl/isocyanate crosslinking reaction begins.

When using aminofunctional binders A), it should be noted that it is definitely preferred to add component C) to the polyisocyanate component B) before mixing binder component A) and polyisocyanate component B) owing to the competing reaction between aminofunctional binders and aminofunctional component C) with the polyisocyanate component B). This way can of course also be used in case of hydroxyfunctional binders A).

The acid and aminofunctional component C) to be used according to the invention is used in such quantities that, on the one hand, after the reaction with the polyisocyanate component B), the desired number of free isocyanate groups is still available in the polyisocyanate component B) for the crosslinking reaction and, on the other hand, the polyisocyanate component B) is given the desired acid functionality. The equivalent ratio of amino groups in component C) to free isocyanate groups of the polyisocyanate component B) may be selected in a way that, e.g., 2-25%, preferably 5-20% of the isocyanate groups of component B) are reacted with the amino groups of component C) (calculated on a molar basis).

If partially masked polyisocyanates are used, it is ensured either that free isocyanate groups are available for crosslinking in addition to the masked isocyanate groups after reaction of the polyisocyanates B) with component C), or that all free isocyanate groups have been reacted for hydrophilization purposes, depending on the degree of masking. In the latter case, the process according to the invention may ultimately also provide completely masked polyisocyanate crosslinking agents that have been rendered hydrophilic in situ just before application.

Particularly good dipersibility of the polyisocyanate component B) in the aqueous phase is achieved if the acid groups of component C) are partially or completely neutralized. Component C) may be presented in already neutralized form or is neutralized after addition to the polyisocyanate or to the aqueous system. The neutralization degree may be between 0% and 200%, preferably between 60% and 120%. Suitable neutralizing agents include basic compounds such as tertiary amines, for example, triethylamine, dimethylethanolamine and diethylethanolamine.

Preferably component C) can be used as aqueous solution, e.g., as 3-30% aqueous solution. Especially preferred component C) is provided in an aqueous neutralized form.

The coating compositions, according to the invention, can be applied using known methods, in particular, by spray application. The coating compositions obtained can be cured at room temperature or forced at higher temperatures, for example, up to 80°C. They can, however, even be cured at higher temperatures of, for example, 80 to 160°C.

The coating compositions, according to the invention, are suitable for automotive and industrial coatings. In the automotive coatings sector, the coatings can be used for both vehicle production line painting and vehicle and vehicle part refinishing. For vehicle production line painting, stoving (baking) temperatures of 80 to 160°C, for example, are used, preferably 110 to 140°C. For refinishing, curing temperatures of, for example, 20°C to 80°C, in particular, 40 to 60°C are used. The coating compositions can also be used for coating large vehicles and transportation vehicles, such as, trucks, busses and railroad cars, where typically curing temperatures of up to 80°C are used. Furthermore, the coating compositions can be used for coating any industrial goods other than motor vehicles.

Either transparent or pigmented coating compositions can be produced. Therefore, the coating compositions according to the invention are suited for use as waterborne clear coats but can be pigmented with conventional pigments and used as waterborne pigmented topcoats, waterborne basecoats or waterborne undercoats such as sealer, primer or primer surfacer. They can be used to coat a substrate with a single coat or within a multilayer coating of substrates. Use as clear coat and pigmented topcoat is preferred.

The present invention thus also concerns the use of the coating compositions, according to the invention, as topcoat and clear coat compositions as well as a method for producing multilayer coatings in automotive and industrial coatings, the colored topcoat and transparent clear coat layers of the multilayer coating, in particular being manufactured from the coating compositions according to the invention.

The coating compositions in the form of a pigmented topcoat can be applied, for example, to normal one-component or two-component filler layers. However, the coatings according to the invention can also be applied and cured as a filler layer, for example, on normal primers, for example, two-component epoxide primers or on electrodeposition primers.

The coating compositions in the form of transparent clear coats can be applied, for example, using the wet-in-wet process on solvent-based or aqueous color and/or effect-giving basecoat layers. In this case, the color and/or effect-giving basecoat layer is applied to a substrate, precoated if necessary, in particular, to precoated vehicle bodies or parts thereof, prior to the application of the clear coat layer from the clear coat according to the invention. Following a drying period, if allowed for, both layers are cured together. Thus, for vehicle production line painting, drying can take place, for example, at 20 to 80°C and for refinishing for 15 to 45 minutes at room temperature, depending on relative air humidity.

The present invention can particularly be used to advantage with the usual hydrophobically, i.e., not especially hydrophilically modified polyisocyanate cross-linking agents. The polyisocyanates modified according to the invention with sulfonic and/or phosphonic acid groups shortly before application (in-situ) are highly compatible with water-reducible binders, e.g., in the form of aqueous binder dispersions and can be mixed simply with these. This is particularly important for such applications of two-component coating compositions, e.g., in vehicle refinishing, where it should be ensured that components can be mixed simply by hand. On the other hand good compatibility and miscibility of binder component and polyisocyanate crosslinking agent lead to coatings with satisfactory appearance, such as, gloss and flow. Furthermore, the use of the coating compositions according to the invention leads to non-hydrophilic coatings with good hardness and chemical as well as water resistance. Also, using the aqueous coating composition or the process for preparing the aqueous coating composition according to the invention allows the preparation of aqueous coating compositions with reduced amount of organic co-solvents while keeping the advantage of acceptable appearance of the resultant coating.

The invention will be further described by reference to the following Examples. All parts and percentages are on a weight basis unless otherwise indicated. All molecular weights disclosed herein are determined by GPC (gel permeation chromatography) using a polystyrene standard.

### Examples

### Preparation of Acrylic Copolymer Dispersion 1

In a reactor equipped with a propeller type of stirrer, a thermometer, condenser and monomer/initiator feeding system, 200 grams of Cardura^{®} E10 (Glycidylester of C10 versatic acid available from Resolution) (CE10) and 90 grams of ethoxypropanol (EPR) were loaded and heated to about 150°C. A mixture of 52 grams of 2-Hydroxyethyl methacrylate (HEMA), 160 grams of Styrene, 68 grams of Acrylic acid (AA), 10 grams of Dicumylperoxide (DCP), 40 grams of CE10 and 40 grams of EPR were added over 2 hours 30 minutes to the reactor while keeping the contents at 150°C. After the feed, the reactor contents were held for 30 minutes. After the 30 minutes hold period, 108 grams of HEMA, 30.4 grams of AA, 141.6 grams of Isobutyl Methacrylate, 5 grams of DCP and 45 grams of EPR were added over 2 hours and 30 minutes at about 150°C followed by a rinsing step for the feed system of 5 grams of EPR. After the rinsing step, the contents of the reactor were held for 2 hours at 150°C. The reactor contents were cooled to 100°C and 100 parts of EPR were distilled off. In a next step, 33 grams of dimethylamino ethanol were added for a theoretical acid value of 20.5, the amount corrected for the measured acid value.

The polymer was diluted with 865 grams of water preheated at about 70°C. The copolymer dispersion had a solids content of 45.1 % and a viscosity of 3500 cps. The copolymer had an acid value of 33.6 mg KOH/g (determined on solids) and a number average molecular weight (Mn) of 4500 g/mole.

The following amino sulphonic acid (ASA) and amino phosphonic acid (APA) solutions were used for preparation of paint examples :

### Solution 1 (ASA 1)

In a reactor equipped with a condensor, stirrer and addition funnel 389 parts of deionized water and 94 parts of N,N-dimethylethanolamine (DMEA) were added and mixed. Then 207 parts of 2 - acrylamido - 2 propane sulfonic acid (AMPS 2404 from Lubrizol) were added and dissolved. The pH was adjusted with DMEA till 8.5. Dissolving the AMPS raised the temperature till about 40°C. In a next step 30 parts of ethylene diamine (EDA) were added followed by a rincing step of 10 parts of deionized water. The mixture was held for about 3 hours. The measured solids was 36.8% and the pH = 10.3.

### Solution 2 (ASA 2)

72 parts of deionised water were mixed with 8 parts of DMEA. In a next step 20 parts of 3-cyclohexylamino propane-1-sulfonic acid (CAPS from Raschig Chemicals) were added and dissolved.

### Solution 3 (APA 1)

In a reactor setup as for Solution 1 (ASA 1) 144 parts of deionized water and 89 parts of DMEA were added and mixed. 127 parts of vinylphosphonic acid (80% solution from Albright Wilson) were added and dissolved. The solution raised the temperature to about 70°C. In a next step 30 part of EDA were added, dissolved in 60 parts of deionized water. 10 parts of deionized water were added as a rincing step and the mixture was held for 3 hours . The measured solids was 43.3% and the pH 8.3.

### Preparation of Topcoats

The following pigment dispersions were used for preparation of topcoats:

| Code | Composition |
|---|---|
| Dispersion 1 | 20 parts of a blue pigment (Hostaperm® blue BT617D from Clariant) |
| | 20 parts of a dispersing agent as described in Patent U.S. 5,231,131 |
| | 0.4 parts of a wetting agent (Surfynol® 104 from Air Products) |
| | 2 parts of AMP95 (amino methyl propanol from Dow) 57.6 parts of demineralised water |
| Dispersion 2 | 25 parts of a violet pigment (Hostaperm® violet RL spez from Clariant) |
| | 20 parts of a dispersing agent as described in Patent U.S. 5,231,131 |
| | 0.3 parts of a wetting agent (Surfynol® 104 from Air Products) |
| | 1 part of AMP95 |
| | 5 parts of Dowanol DPM (dipropylene glycol methyl ether from Dow) |
| | 48.7 parts of demineralised water |
| Dispersion 3 | 10 parts of a black pigment (Raven® 5000 from Columbian Chemicals) |
| | 16 parts of a dispersing agent as described in Patent U.S. 5,231,131 |
| | 0.3 parts of a wetting agent (Surfynol® 104 from Air Products) |
| | 1.8 parts of AMP95 |
| | 71.9 parts of demineralised water |
| Dispersion 4 | 73 parts of titanium dioxide pigment (TiPure® R706 from DuPont) |
| | 8.3 parts of a dispersing agent as described in Patent U.S. 5,231,131 |
| | 1.5 parts of a wetting agent (Surfynol® 104 from Air Products) |
| | 1.7 parts of AMP95 |
| | 3 parts of Dowanol DPM |
| | 12.5 parts of demineralised water |

### Paint Example 1

A blue topcoat formulation was prepared by mixing 66.2 parts of an Acrylic Copolymer Dispersion 1 (see preparation above) with 0.1 parts of a wetting agent (Byk® 380N (Byk Chemie)) and 0.5 parts of a defoaming agent (Byk® 011 (Byk Chemie). To this mixture, 8.0 parts of Dispersion 1, 3.6 parts of Dispersion 2, 1.6 parts of Dispersion 3 and 6.2 parts of Dispersion 4 were added and mixed. To this blend 3.8 parts of Solution 1 and 9.9 parts of water were added and mixed in. 100 parts of the above-mentioned topcoat were mixed with 22.6 parts of a 75% solution of Desmodur® XP241 0 (100% solids asymmetric hexamethylenediisocyanate trimer from Bayer) in butyl glycol acetate. The topcoat has been sprayed in a dry-film thickness of 40-45 µm on an steel panel (precoated with electrodeposition coating and commercial primer surfacer) and baked for 30 minutes at 80°C.

### Paint Example 2

A blue topcoat, formulation was prepared by mixing 65.7 parts of an Acrylic Copolymer Dispersion (see preparation above) with 0.1 parts of a wetting agent (Byk® 380N (Byk Chemie)) and 0.5 parts of a defoaming agent (Byk® 011 (Byk Chemie). To this mixture, 7.9 parts of Dispersion 1, 3.6 parts of Dispersion 2, 1.6 parts of Dispersion 3 and 6.1 parts of Dispersion 4 were added and mixed. To this blend 2.3 parts of Solution 3 and 12.2 parts of water were added and mixed in. 100 parts of the above-mentioned topcoat were mixed with 22.6 parts of a 75% solution of Desmodur® XP2410 (100% solids asymmetric hexamethylenediisocyanate trimer from Bayer) in butyl glycol acetate. The topcoat has been sprayed in a dry-film thickness of 40-45 µm on an steel panel (precoated with electrodeposition coating and commercial primer surfacer) and baked for 30 minutes at 80°C.

### Comparative Example 1

A blue topcoat, formulation was prepared by mixing 68.8 parts of an Acrylic Copolymer Dispersion (see preparation above) with 0.1 parts of a wetting agent (Byk® 380N (Byk Chemie)) and 0.5 parts of a defoaming agent (Byk® 011 (Byk Chemie). To this mixture, 8.3 parts of Dispersion 1, 3.8 parts of Dispersion 2, 1.6 parts of Dispersion 3 and 6.5 parts of Dispersion 4 were added and mixed. To this blend 10.4 parts of water were added and mixed in. 100 parts of the above-mentioned topcoat were mixed with 26.1 parts of a 75% solution of Desmodur® XP2410 (100% solids asymmetric hexamethylenediisocyanate trimer from Bayer) in butyl glycol acetate. The topcoat has been sprayed in a dry-film thickness of 40-45 µm on an steel panel (precoated with electrodeposition coating and commercial primer surfacer) and baked for 30 minutes at 80°C.

The appearance results of paint examples 1 and 2 and comparative example 1 are shown in Table 1.

**Table 1:**

| | **Comparative example 1** | **Paint example 1** | **Paint example 2** |
|---|---|---|---|
| Gloss 20° | 63.9 | 73.6 | 77.1 |
| DOI | 70.8 | 80.8 | 84.6 |
| Dullness | 46.1 | 30.1 | 19.7 |
| Tension | 17.0 | 21.1 | 15.5 |
| Long wave | 9.5 | 3.4 | 13.3 |
| Short wave | 21.2 | 14.0 | 26.1 |

The results in Table 1 show an improved appearance for the coatings prepared according to the invention, especially in terms of gloss, DOI and dullness, compared with the comparative coating composition not containing component C).

### Paint Example 3

A blue topcoat, formulation was prepared by mixing 66.3 parts of an Acrylic Copolymer Dispersion (see preparation above) of with 0.1 parts of a wetting agent (Byk® 380N (Byk Chemie)) and 0.5 parts of a defoaming agent (Byk® 011 (Byk Chemie). To this mixture, 8.0 parts of Dispersion 1, 3.6 parts of Dispersion 2, 1.6 parts of Dispersion 3 and 6.2 parts of dispersion 4 were added and mixed. To this blend 5.3 parts of Solution 2 and 8.4 parts of water were added and mixed in. 100 parts of the above-mentioned topcoat were mixed with 23 parts of a 75% solution of Desmodur® N 3600 (100% solids hexamethylenediisocyanate trimer from Bayer) in butyl glycol acetate. The topcoat (40-45µ) has been sprayed on an electro coated steel panel with commercial primer surfacer and baked for 30 minutes at 80°C.

### Comparative Example 2

A blue topcoat formulation was prepared by mixing 69.5 parts of an Acrylic Copolymer Dispersion (see preparation above) with 0.1 parts of a wetting agent (Byk® 380N (Byk Chemie)) and 0.5 parts of a defoaming agent (Byk® 011 (Byk Chemie). To this mixture, 8.2 parts of Dispersion 1, 3.8 parts of Dispersion 2, 1.7 parts of Dispersion 3 and 6.4 parts of Dispersion 4 were added and mixed. To this blend 9.8 parts of water were added and mixed in. 100 parts of the above-mentioned topcoat were mixed with 24 parts of a 75% solution of Desmodur® N 3600 (100% solids hexamethylenediisocyanate trimer from Bayer) in butyl glycol acetate. The topcoat (40-45µ) has been sprayed on an electro coated steel panel with commercial primer surfacer and baked for 30 minutes at 80°C.

The appearance results of paint example 3 and comparative example 2 are shown in Table 2.

**Table 2**

| | **Comparative example 2** | **Paint example 3** |
|---|---|---|
| Gloss 20° | 41.0 | 60.3 |
| DOI | 65.8 | 70.8 |
| Dullness | 54.9 | 42.6 |
| Tension | 18.8 | 18.2 |
| Long wave | 6.1 | 7.1 |
| Short wave | 19.5 | 34.7 |

The results in Table 2 show an improved appearance for the coating prepared according to the invention, especially in terms of gloss, DOI and dullness, compared with the comparative coating composition not containing component C).

### Preparation of Clear Coats

An activator solution was prepared by blending 80 parts Desmodur® XP2410 (100% solids asymmetric hexamethylenediisocyanate trimer from Bayer) with 20 parts of butyl glycol acetate.

### Paint Example 4

A clear coat formulation was prepared by mixing 89.7 parts of an acrylic copolymer dispersion 1 (see preparation above) with 10.3 parts of butoxy propanol. To this blend 7.1 parts of Solution 2 were added and mixed. This mixture was stored overnight.

107.1 parts of the above-mentioned clear coat were mixed with 28 parts of the activator. In a second step the viscosity of the clear coat was adjusted by addition of 24.4 parts water to a spray viscosity of 19-21 seconds (according to DIN EN ISO 2431, DIN 4 cup, 20°C). The clear coat was sprayed over a commercial black waterborne basecoat and baked for 30 minutes at 60°C.

### Paint Example 5

A clear coat formulation was prepared by mixing 89.7 parts of an Acrylic Copolymer Dispersion 1 (see preparation above) with 10.3 parts butoxy propanol. To this blend 21.2 parts of Solution 2 were added and mixed. This mixture was stored overnight.

121.2 parts of the above-mentioned clear coat were mixed with 28 parts of the activator. In a second step the viscosity of the clear coat was adjusted by addition of 24.4 parts water to a spray viscosity of 19-21 seconds (according to DIN EN ISO 2431, DIN 4 cup, 20°C). The clear coat was sprayed over a commercial black waterborne basecoat and baked for 30 minutes at 60°C.

### Paint Example 6

A clear coat formulation was prepared by mixing 89.7 parts of an Acrylic Copolymer Dispersion 1 (see preparation above) with 10.3 parts of butoxy propanol. To this blend 5.1 parts of Solution 1 were added and mixed. This mixture was stored overnight.

105.1 parts of the above-mentioned clear coat were mixed with 28 parts of the activator. In a second step the viscosity of the clear coat was adjusted by addition of 30.9 parts water to a spray viscosity of 19-21 seconds (according to DIN EN ISO 2431, DIN 4 cup, 20°C). The clear coat was sprayed over a commercial black waterborne basecoat and baked for 30 minutes at 60°C.

### Paint Example 7

A clear coat formulation was prepared by mixing 89.7 parts of the Acrylic Copolymer Dispersion 1 (see preparation above) with 10.3 parts of butoxy propanol. To this blend 15.2 parts of Solution 1 were added and mixed. This mixture was stored overnight.

115.3 parts of the above-mentioned clear coat were mixed with 28 parts of the activator. In a second step the viscosity of the clear coat was adjusted by addition of 37.1 parts water to a spray viscosity of 19-21 seconds (according to DIN EN ISO 2431, DIN 4 cup, 20°C). The clear coat was sprayed over a commercial black waterborne basecoat and baked for 30 minutes at 60°C.

### Comparative Example 3

A clear coat formulation was prepared by mixing 89.7 parts of the Acrylic Copolymer Dispersion 1 (see preparation above) with 10.3 parts of butoxy propanol. This mixture was stored overnight.

100 parts of the above-mentioned clear coat were mixed with 28 parts of the activator. In a second step the viscosity of the clear coat was adjusted by addition of 33.3 parts water to a spray viscosity of 19-21 seconds (according to DIN EN ISO 2431, DIN 4 cup, 20°C).

The clear coat was sprayed over a commercial black waterborne basecoat and baked for 30 minutes at 60°C.

The appearance results of paint examples 4 to 7 and comparative example 3 are shown in Table 3.

**Table 3**

| | **Comparative** example 3 | Paint example 4 | Paint example 5 | Paint example 6 | Paint example 7 |
|---|---|---|---|---|---|
| Gloss 20° | 65.4 | 79.2 | 86.5 | 82.7 | 79.9 |
| DOI | 69.1 | 78.4 | 90.7 | 87.7 | 90.2 |
| Dullness | 47.3 | 31.2 | 9.5 | 16.4 | 12.1 |
| Tension | 12.5 | 14.3 | 18.2 | 20.5 | 21.6 |
| Long wave | 24.1 | 17.1 | 7.5 | 4.1 | 3.0 |
| Shortwave | 31.4 | 27.1 | 17.7 | 14.0 | 13.7 |
| Sharpness | 25 | 42.5 | 64.1 | 64.9 | 66.5 |

The results in Table 3 show an improved appearance for the coatings prepared according to the invention in terms of all tested parameters, compared with the comparative coating composition not containing component C).

### Testing Methods:

### Gloss 20°:

Gloss values are measured with a Dr Lange - Type REFO 3 apparatus at an angle of 20°

### Distinction of Image (DOI), Dullness, Tension and Sharpness:

The DOI, dullness, tension and sharpness values of the films have been determined using a Wave-Scan DOI device from Byk Gardner (D-4816 apparatus).

## Claims

1. Aqueous coating composition, comprising
A) at least one water-dilutable binder with functional groups containing active hydrogen,
B) at least one polyisocyanate cross-linking agent with free isocyanate groups,
C) at least one amino functional compound having at least one group selected from a group consisting of primary amino group, secondary amino group and mixtures thereof, and having at least one group selected from a group consisting of sulfonic acid group, phosphonic acid group and mixtures thereof,
D) water and optionally,
E) coating additives, pigments and organic solvents.

2. Aqueous coating composition of claim 1, comprising 10-90% by weight solids of component A), 5-70% by weight solids of component B) and 0.05-15% by weight solids of component C), wherein the % by weight of components A), B) and C) add up to 100% by weight.

3. Aqueous coating composition of claim 2, comprising 0.1-10% by weight solids of component C).

4. Aqueous coating composition of claim 1, wherein component A) comprises at least one hydroxy-functional water-dilutable binder.

5. Aqueous coating composition of claim 1, wherein component A) comprises at least one water-dilutable binder having carboxylic acid groups.

6. Aqueous coating composition of claim 1, wherein component A) comprises at least one hydroxy-functional water-dilutable binder selected from the group consisting of (meth)acrylic copolymers, polyurethanes, polyesters and mixtures thereof.

7. Aqueous coating composition of claim 1, wherein component B) comprises at least one polyisocyanate cross-linking agent with free isocyanate groups and with blocked isocyanate groups.

8. Aqueous coating composition of claim 1, wherein component C) comprises at least one mono- or disulfonic acid with at least one primary and/or secondary amino group.

9. Aqueous coating composition of claim 1, wherein component C) comprises at least one mono- or diphosphonic acid with at least one primary and/or secondary amino group.

10. Aqueous coating composition of claim 1, wherein component A) comprises at least one hydroxy-functional water-dilutable binder selected from the group consisting of (meth)acrylic copolymers, polyurethanes, polyesters and mixtures thereof and wherein component C) comprises at least one compound selected from the group consisting of sulfonic acid with at least one primary and/or secondary amino group, phosphonic acid with at least one primary and/or secondary amino group and mixtures thereof.

11. Aqueous coating composition of claim 1, wherein component C) has a molecular weight Mn of 97 to 7000 g/mol.

12. Aqueous coating composition of claim 1, wherein component C) has a molecular weight Mn of 125 to 2000 g/mol.

13. Aqueous coating composition of claim 1, wherein component C) has a molecular weight Mn of 125 to 1000 g/mol.

14. Aqueous coating composition of claim 1, wherein component A) comprises at least one hydroxy-functional water-dilutable binder selected from the group consisting of (meth)acrylic copolymers, polyurethanes, polyesters and mixtures thereof and component C) comprises at least one compound having a molecular weight of 97 to 7000 g/mol.

15. Aqueous coating composition of claim 1, wherein component A) comprises at least one hydroxy-functional water-dilutable binder selected from the group consisting of (meth)acrylic copolymers, polyurethanes, polyesters and mixtures thereof and component C) comprises at least one compound having a molecular weight of 125 to 2000 g/mol.

16. Aqueous coating composition of claim 1, wherein component C) is at least partially neutralized.

17. Aqueous coating composition of claim 1, comprising
Component AC), comprising a mixture of at least one water-dilutable hydroxy-functional binder A) and at least one at least one amino functional compound C) having at least one group selected from a group consisting of primary amino group, secondary amino group and mixtures thereof, and having at least one group selected from a group consisting of sulfonic acid group, phosphonic acid group and mixtures thereof ,
Component B), comprising at least one polyisocyanate cross-linking agent with free isocyanate groups,
D) water and optionally,
E) coating additives, pigments and organic solvents.

18. Process for preparing the aqueous coating compositions of claim 1, comprising the steps:
I) providing a binder component comprising at least one water-dilutable binder with functional groups containing active hydrogen A),
II) providing a cross-linking agent component, comprising at least one polyisocyanate cross-linking agent with free isocyanate groups B),
III) mixing the binder component A) and the crosslinking agent component B) with each other and
IV) adding at least one amino functional compound C) having at least one group selected from a group consisting of primary amino group, secondary amino group and mixtures thereof, and having at least one group selected from a group consisting of sulfonic acid group, phosphonic acid group and mixtures thereof , to the polyisocyanate cross-linking agent B),
wherein the amino functional compound C) is added to the polyisocyanate cross-linking agent B) shortly before application of the aqueous coating composition.

19. Process of claim 17, comprising the steps
I) providing a component AC) comprising at least one water-dilutable binder with functional groups containing active hydrogen A) and at least one amino functional and acid functional compound C) having at least one group selected from a group consisting of primary amino group, secondary amino group and mixtures thereof, and having at least one group selected from a group consisting of sulfonic acid group, phosphonic acid group and mixtures thereof
II) providing a cross-linking agent component, comprising at least one polyisocyanate cross-linking agent with free isocyanate groups B),
III) mixing component AC) and the crosslinking agent component B) with each other shortly before application of the aqueous coating composition.

20. Process of claim 17, wherein the amino functional compound C) is added to the polyisocyanate cross-linking agent B) before mixing the binder component A) and the crosslinking agent component B).

21. A multi-layer coating on a substrate comprising at least one coat of the coating composition of claim 1.

22. A multi-layer coating of claim 19, wherein the substrate is a motor vehicle or a motor vehicle part.

23. A multi-layer coating on a substrate comprising a clear coat layer of the coating composition of claim 1.

24. A multi-layer coating on a substrate comprising a pigmented top coat layer of the coating composition of claim 1.

## Patentansprüche

1. Wässrige Beschichtungszusammensetzung umfassend
A) mindestens ein wasserverdünnbares Bindemittel mit funktionellen Gruppen, die aktiven Wasserstoff enthalten,
B) mindestens ein Polyisocyanatvernetzungsmittel mit freien Isocyanatgruppen,
C) mindestens eine aminofunktionelle Verbindung, die mindestens eine Gruppe aufweist ausgewählt aus einer Gruppe bestehend aus einer primären Aminogruppe, sekundären Aminogruppe und Mischungen derselben, und die mindestens eine Gruppe aufweist ausgewählt aus einer Gruppe bestehend aus einer Sulfonsäuregruppe, Phosphonsäuregruppe und Mischungen derselben,
D) Wasser und wahlweise
E) Beschichtungszusatzmittel, Pigmente und organische Lösungsmittel.

2. Wässrige Beschichtungszusammensetzung nach Anspruch 1, umfassend 10 - 90 Gew.-% Feststoffe der Komponente A), 5 - 70 Gew.-% Feststoffe der Komponente B) und 0,05 - 15 Gew.-% Feststoffe der Komponente C), wobei der Gewichtsprozentsatz der Komponenten A), B) und C) 100 Gew.-% ausmacht.

3. Wässrige Beschichtungszusammensetzung nach Anspruch 2, umfassend 0,1 - 10 Gew.-% Feststoffe der Komponente C).

4. Wässrige Beschichtungszusammensetzung nach Anspruch 1, wobei die Komponente A) mindestens ein hydroxyfunktionelles wasserverdünnbares Bindemittel umfasst.

5. Wässrige Beschichtungszusammensetzung nach Anspruch 1, wobei die Verbindung A) mindestens ein wasserverdünnbares Bindemittel umfasst, das Carbonsäuregruppen aufweist.

6. Wässrige Beschichtungszusammensetzung nach Anspruch 1, wobei die Komponente A) mindestens ein hydroxyfunktionelles wasserverdünnbares Bindemittel umfasst ausgewählt aus der Gruppe bestehend aus (Meth)acrylcopolymeren, Polyurethanen, Polyestern und Mischungen derselben.

7. Wässrige Beschichtungszusammensetzung nach Anspruch 1, wobei die Komponente B) mindestens ein Polyisocyanatvernetzungsmittel mit freien Isocyanatgruppen und mit geblockten Isocyanatgruppen umfasst.

8. Wässrige Beschichtungszusammensetzung nach Anspruch 1, wobei die Komponente C) mindestens eine Mono- oder Disulfonsäure mit mindestens einer primären und/oder sekundären Aminogruppe umfasst.

9. Wässrige Beschichtungszusammensetzung nach Anspruch 1, wobei die Komponente C) mindestens eine Mono- oder Diphosphonsäure mit mindestens einer primären und/oder sekundären Aminogruppe umfasst.

10. Wässrige Beschichtungszusammensetzung nach Anspruch 1, wobei die Komponente A) mindestens ein hydroxyfunktionelles wasserverdünnbares Bindemittel umfasst ausgewählt aus der Gruppe bestehend aus (Meth)acrylcopolymeren, Polyurethanen, Polyestern und Mischungen derselben und wobei die Komponente C) mindestens eine Verbindung umfasst ausgewählt aus der Gruppe bestehend aus einer Sulfonsäure mit mindestens einer primären und/oder sekundären Aminogruppe, Phosphonsäure mit mindestens einer primären und/oder sekundären Aminogruppe und Mischungen derselben.

11. Wässrige Beschichtungszusammensetzung nach Anspruch 1, wobei die Komponente C) ein Molekulargewicht Mn von 97 bis 7000 g/Mol aufweist.

12. Wässrige Beschichtungszusammensetzung nach Anspruch 1, wobei die Komponente C) ein Molekulargewicht Mn von 125 bis 2000 g/Mol aufweist.

13. Wässrige Beschichtungszusammensetzung nach Anspruch 1, wobei die Komponente C) ein Molekulargewicht Mn von 125 bis 1000 g/Mol aufweist.

14. Wässrige Beschichtungszusammensetzung nach Anspruch 1, wobei die Komponente A) mindestens ein hydroxyfunktionelles wasserverdünnbares Bindemittel umfasst ausgewählt aus der Gruppe bestehend aus (Meth)acrylcopolymeren, Polyurethanen, Polyestern und Mischungen derselben und die Komponente C) mindestens eine Verbindung umfasst, die ein Molekulargewicht von 97 bis 7000 g/Mol aufweist.

15. Wässrige Beschichtungszusammensetzung nach Anspruch 1, wobei die Komponente A) mindestens ein hydroxyfunktionelles wasserverdünnbares Bindemittel umfasst ausgewählt aus der Gruppe bestehend aus (Meth)acrylcopolymeren, Polyurethanen, Polyestern und Mischungen derselben und die Komponente C) mindestens eine Verbindung umfasst, die ein Molekulargewicht von 125 bis 2000 g/Mol aufweist.

16. Wässrige Beschichtungszusammensetzung nach Anspruch 1, wobei die Komponente C) mindestens teilweise neutralisiert ist.

17. Wässrige Beschichtungszusammensetzung nach Anspruch 1 umfassend
die Komponente AC, umfassend eine Mischung von mindestens einem wasserverdünnbaren hydroxyfunktionellen Bindemittel A) und mindestens einer aminofunktionellen Verbindung C), die mindestens eine Gruppe aufweist ausgewählt aus einer Gruppe bestehend aus einer primären Aminogruppe, einer sekundären Aminogruppe und Mischungen derselben, und mindestens eine Gruppe aufweist, ausgewählt aus einer Gruppe bestehend aus einer Sulfonsäuregruppe, Phosphonsäuregruppe und Mischungen derselben,
die Komponenten B), umfassend mindestens ein Polyisocyanatvernetzungsmittel mit freien Isocyanatgruppen,
D) Wasser und wahlweise
E) Beschichtungszusatzmittel, Pigmente und organische Lösungsmittel.

18. Verfahren für das Herstellen von wässrigen Beschichtungszusammensetzungen nach Anspruch 1, umfassend die Schritte des:
I) Bereitstellens einer Bindemittelkomponente umfassend mindestens ein wasserverdünnbares Bindemittel mit funktionellen Gruppen, die aktiven Wasserstoff A) enthalten,
II) Bereitstellens einer Vernetzungsmittelkomponente umfassend mindestens ein Polyisocyanatvernetzungsmittel mit freien Isocyanatgruppen B),
III) Mischens der Bindemittelkomponente A) und der Vernetzungsmittelkomponente B) miteinander und
IV) Zugebens mindestens einer amionofunktionellen Verbindung C), die mindestens eine Gruppe aufweist, ausgewählt aus einer Gruppe bestehend aus einer primären Aminogruppe, sekundären Aminogruppe und Mischungen derselben, und die mindestens eine Gruppe aufweist ausgewählt aus einer Gruppe bestehend aus einer Sulfonsäuregruppe, Phosphonsäuregruppe und Mischungen derselben, zu dem Polyisocyanatvernetzungsmittel B)
wobei die aminofunktionelle Verbindung C) dem Polyisocyanatvernetzungsmittel B) kurz vor Aufbringen der wässrigen Beschichtungszusammensetzung zugegeben wird.

19. Verfahren nach Anspruch 17 umfassend die Schritte des
I) Bereitstellens einer Komponenten AC) umfassend mindestens ein wasserverdünnbares Bindemittel mit funktionellen Gruppen, die aktiven Wasserstoff A) enthalten, und mindestens eine aminofunktionelle und säurefunktionelle Verbindung C), die mindestens eine Gruppe aufweist ausgewählt aus einer Gruppe bestehend aus einer primären Aminogruppe, sekundären Aminogruppe und Mischungen derselben, und mindestens eine Gruppe aufweist ausgewählt aus der Gruppe bestehend aus einer Sulfonsäuregruppe, Phosphonsäuregruppe und Mischungen derselben,
II) Bereitstellens einer Vernetzungsmittelkomponente umfassend mindestens ein Polyisocyanatvernetzungsmittel mit freien Isocyanatgruppen B),
III) Mischens der Komponente AC) und der Vernetzungsmittelkomponente B) miteinander kurz vor dem Aufbringen der wässrigen Beschichtungszusammensetzung.

20. Verfahren nach Anspruch 17, wobei die aminofunktionelle Verbindung C) dem Polyisocyanatvernetzungsmittel B) kurz vor dem Mischen der Bindemittelkomponente A) and der Vernetzungsmittelkomponente B) zugegeben wird.

21. Mehrschichtige Beschichtung auf einem Substrat, umfassend mindestens eine Schicht einer Beschichtungszusammensetzung nach Anspruch 1.

22. Mehrschichtige Beschichtung nach Anspruch 19, wobei das Substrat ein Motorfahrzeug oder ein Motorfahrzeugteil ist.

23. Mehrschichtige Beschichtung auf einem Substrat umfassend eine klare Beschichtungsschicht aus der Beschichtungszusammensetzung nach Anspruch 1.

24. Mehrschichtige Beschichtung auf einem Substrat umfassend eine pigmentierte Decklackschicht aus der Beschichtungszusammensetzung nach Anspruch 1.

## Revendications

1. Composition aqueuse de revêtement, comprenant
A) au moins un liant diluable dans l'eau avec des groupes fonctionnels contenant un hydrogène actif,
B) au moins un agent réticulant polyisocyanate avec des groupes isocyanate libres,
C) au moins un composé à fonction amino ayant au moins un groupe choisi dans le groupe consistant en un groupe amino primaire, un groupe amino secondaire et leurs mélanges, et ayant au moins un groupe choisi dans le groupe consistant en un groupe acide sulfonique, un groupe acide phosphonique et leurs mélanges,
D) de l'eau et éventuellement,
E) des additifs de revêtement, des pigments et des solvants organiques.

2. Composition aqueuse de revêtement selon la revendication 1, comprenant 10 à 90% en poids de matières solides du composant A), 5 à 70% en poids de matières solides du composant B) et 0,05 à 15% en poids de matières solides du composant C), où le pourcentage en poids des composants A), B) et C) représente 100% en poids.

3. Composition aqueuse de revêtement selon la revendication 2, comprenant 0,1 à 10% en poids de matières solides du composant C).

4. Composition aqueuse de revêtement selon la revendication 1, dans laquelle le composant A) comprend au moins un liant diluable dans l'eau à fonction hydroxy.

5. Composition aqueuse de revêtement selon la revendication 1, dans laquelle le composant A) comprend au moins un liant diluable dans l'eau ayant des groupes acide carboxylique.

6. Composition aqueuse de revêtement selon la revendication 1, dans laquelle le composant A) comprend au moins un liant diluable dans l'eau à fonction hydroxy choisi dans le groupe consistant en copolymères (méth)acryliques, polyuréthanes, polyesters et leurs mélanges.

7. Composition aqueuse de revêtement selon la revendication 1, dans laquelle le composant B) comprend au moins un agent réticulant polyisocyanate avec des groupes isocyanate libres et avec des groupes isocyanate bloqués.

8. Composition aqueuse de revêtement selon la revendication 1, dans laquelle le composant C) comprend au moins un acide mono- ou disulfonique avec au moins un groupe amino primaire et/ou secondaire.

9. Composition aqueuse de revêtement selon la revendication 1, dans laquelle le composant C) comprend au moins un acide mono- ou diphosphonique avec au moins un groupe amino primaire et/ou secondaire.

10. Composition aqueuse de revêtement selon la revendication 1, dans laquelle le composant A) comprend au moins un liant diluable dans l'eau à fonction hydroxy choisi dans le groupe consistant en copolymères (méth)acryliques, polyuréthanes, polyesters et leurs mélanges et dans laquelle le composant C) comprend au moins un composé choisi dans le groupe consistant en un acide sulfonique avec au moins un groupe amino primaire et/ou secondaire, un acide phosphonique avec au moins un groupe amino primaire et/ou secondaire, et leurs mélanges.

11. Composition aqueuse de revêtement selon la revendication 1, dans laquelle le composant C) a un poids moléculaire Mn de 97 à 7000 g/mol.

12. Composition aqueuse de revêtement selon la revendication 1, dans laquelle le composant C) a un poids moléculaire Mn de 125 à 2000 g/mol.

13. Composition aqueuse de revêtement selon la revendication 1, dans laquelle le composant C) a un poids moléculaire Mn de 125 à 1000 g/mol.

14. Composition aqueuse de revêtement selon la revendication 1, dans laquelle le composant A) comprend au moins un liant diluable dans l'eau à fonction hydroxy choisi dans le groupe consistant en copolymères (méth)acryliques, polyuréthanes, polyesters et leurs mélanges et le composant C) comprend au moins un composé ayant un poids moléculaire de 97 à 7000 g/mol.

15. Composition aqueuse de revêtement selon la revendication 1, dans laquelle le composant A) comprend au moins un liant diluable dans l'eau à fonction hydroxy choisi dans le groupe consistant en copolymères (méth)acryliques, polyuréthanes, polyesters et leurs mélanges et le composant C) comprend au moins un composé ayant un poids moléculaire de 125 à 2000 g/mol.

16. Composition aqueuse de revêtement selon la revendication 1, dans laquelle le composant C) est au moins partiellement neutralisé.

17. Composition aqueuse de revêtement selon la revendication 1, comprenant
un composant AC), comprenant un mélange d'au moins un liant à fonction hydroxy diluable dans l'eau A) et d'au moins un composé à fonction amino C) ayant au moins un groupe choisi dans le groupe consistant en un groupe amino primaire, un groupe amino secondaire et leurs mélanges, et ayant au moins un groupe choisi dans le groupe consistant en un groupe acide sulfonique, un groupe acide phosphonique et leurs mélanges,
un composant B), comprenant au moins un agent réticulant polyisocyanate avec des groupes isocyanate libres,
D) de l'eau et éventuellement,
E) des additifs de revêtement, des pigments et des solvants organiques.

18. Procédé de préparation des compositions aqueuses de revêtement selon la revendication 1, comprenant les étapes de:
I) fourniture d'un composant liant comprenant au moins un liant diluable dans l'eau avec des groupes fonctionnels contenant un hydrogène actif A),
II) fourniture d'un composant agent réticulant, comprenant au moins un agent réticulant polyisocyanate avec des groupes isocyanate libres B),
III) mélange du composant liant A) et du composant agent réticulant B) et
IV) addition d'au moins un composé à fonction amino C) ayant au moins un groupe choisi dans le groupe consistant en un groupe amino primaire, un groupe amino secondaire et leurs mélanges, et ayant au moins un groupe choisi dans le groupe consistant en un groupe acide sulfonique, un groupe acide phosphonique et leurs mélanges, à l'agent réticulant polyisocyanate B),
où le composé à fonction amino C) est ajouté à l'agent réticulant polyisocyanate B) très peu de temps avant application de la composition aqueuse de revêtement.

19. Procédé selon la revendication 17, comprenant les étapes de
I) fourniture d'un composant AC) comprenant au moins un liant diluable dans l'eau avec des groupes fonctionnels contenant un hydrogène actif A) et au moins un composé à fonction amino et à fonction acide
C) ayant au moins un groupe choisi dans le groupe consistant en un groupe amino primaire, un groupe amino secondaire et leurs mélanges, et ayant au moins un groupe choisi dans le groupe consistant en un groupe acide sulfonique, un groupe acide phosphonique et leurs mélanges,
II) fourniture d'un composant agent réticulant, comprenant au moins un agent réticulant polyisocyanate avec des groupes isocyanate libres B),
III) mélange du composant AC) et du composant agent réticulant B) très peu de temps avant application de la composition aqueuse de revêtement.

20. Procédé selon la revendication 17, dans lequel le composé à fonction amino C) est ajouté à l'agent réticulant polyisocyanate B) avant mélange du composant liant A) et du composant agent réticulant B).

21. Revêtement multicouche sur un substrat comprenant au moins une couche de la composition de revêtement selon la revendication 1.

22. Revêtement multicouche selon la revendication 19, dans lequel le substrat est un véhicule à moteur ou une pièce de véhicule à moteur.

23. Revêtement multicouche sur un substrat comprenant une couche de revêtement transparente de la composition de revêtement selon la revendication 1.

24. Revêtement multicouche sur un substrat comprenant une couche supérieure de revêtement pigmentée de la composition de revêtement selon la revendication 1.
